# EUROPEAN PATENT APPLICATION

(11) **EP 3 846 116 A2**
(43) Date of publication of application: **07.07.2021**
(21) Application number: 19856397.5
(22) Date of filing: 21.08.2019
(51) Int. Cl.: G06Q 50/30, G06Q 30/02, G06Q 10/06

(54) **NUMERICAL DETERMINATION SYSTEM AND METHOD THEREFOR**

(30) Priority: 28.08.2018 KR 20180101279
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Cabinet Chaillot
(86) International application number: PCT/KR2019/010612
(87) International publication number: WO 2020/045885

(57) **Abstract**

Disclosed are a numerical determination system and a method thereof including: an operation computer, which receives an issue requiring a numerical determination so as to converge collective intelligence and compensates for the collective intelligence having contributed to the numerical determination; a numerical determination result receiving means which receives the determined numerical information from the operation computer; and a collective intelligence converging system, which receives, from the operation computer, the information about the subject for numerical determination, the numerical information about the minimum number of persons for preventing tampering, the compensation information, and the like so as to converge collective intelligence of participants participating in the numerical determination by having, as background knowledge, opinions of the experts, and transmits, to the operation computer, information about the converged numerical values, information about the participants to be compensated, and the like.

## Description

### BACKGROUND OF THE INVENTION

### Field of the Invention

The present invention relates to a numerical determination system and a method thereof. More specifically, the present invention relates to a numerical determination system and a method thereof which converges collective intelligence of experts and general participants to determine optimized numerical values, allows participants who provide opinions of collective intelligence participating in numerical determination to refer to objective information presented by experts, so as to exclude subjectivity in optimized numerical determination, simultaneously provides an apparatus for preventing tampering in the collective intelligence converging process to converge objective values without being polluted, and compensates for participants who contributed to the optimized numerical determination, in determining numerical values such as specific product prices.

### Description of the Related Art

In many cases, numerical values have to be determined, such as consumer sale prices of new products, employee salaries of companies, and budgets for construction works. Generally, consumer prices of new products and employee annual salaries are determined by the companies, and the budgets for construction works are unilaterally determined by contractors. However, in many cases, the unilateral numerical determination by companies or contractors is not objective and rational. In particular, since there is a deep relationship with product consumer prices of other competitors in determining consumer prices for products such as new products, objective, rational, and consumer-friendly price determination is very important.

As an invention for determining the consumer prices of these products, there is disclosed a method for deciding the price of goods by a customer on the mall of internet and a system thereof in Korean Patent Publication No. 10-2007-0062065 (published on June 15, 2007).

In Korean Patent Publication No. 10-2007-0062065, the method includes the steps of accessing an internet shopping mall site; reading information on selected goods from a goods information DB under a control of a shopping mall web server and then transmitting and displaying the read information to a user terminal, when a user searches the store classification menu and selects a product to be purchased; displaying an ordering screen including a goods sale price determination screen configured to allow the consumer to finally determine the goods sale price before payment among sale price determination items, when the consumer selects an ordering menu; and calculating a goods sale price by summing only the selected items based on a goods-specific item price read from a goods-specific item price DB under the control of the shopping mall and then displaying the calculated goods sale price with other order information, when a predetermined item is selected by the customer from among the sale price determination items on the goods sale price determination screen. According to the present invention, there is disclosed a configuration of the invention that maximizes the profits of consumers by minimizing the distribution margin of the seller, and gives the seller a profit that can achieve innovative sales improvement by increasing the purchasing power of an internet shopping mall.

In Korean Patent Publication No. 10-2007-0062065, as a method for determining goods purchase price of a specific customer, there is a problem that the method cannot be presented at an objective price that can be applied to all consumers by converging collective opinions.

Further, as the invention of determining prices using collective opinions and collective intelligence, there is disclosed a system and a method for trading used items based on collective intelligence in Korean Patent Publication No. 10-2017-0089618 (published on August 4, 2017).

Korean Patent Publication No. 10-2017-0089618 is a configuration relating to a system for trading used items based on collective intelligence including a bid range setting unit which sets an allowable bid price range by using sales item information received from a seller terminal; and a transaction mediating unit which calculates an average value of desired purchase price information in consideration of the allowable bid price range and mediates the item transaction by using the average value. The bid range setting unit refers to pre-sales data in a database corresponding to the sale item information, evaluates a residual value for depreciation of the sale item information, and sets the allowable bid price range. The transaction mediating unit transmits the average value to the seller terminal to request a reply on whether or not the sales are progressing, and calculates a difference between the desired sales price and the average value included in the sales item information to send transaction successful bid information to a purchaser terminal that presented desired purchase price information closest to the desired sales price from the desired purchase price information used for calculating the average value, when the result is included in a predetermined range.

However, in Korean Patent Publication No. 10-2017-0089618, as the invention for determining a personalized purchase price applied to a specific purchaser, there is a problem that the method cannot be presented at an objective price that can be applied to all consumers by converging collective opinions.

Therefore, in the numerical determination of goods prices, etc., there is a need for the invention of a numerical determination system and a method thereof which provides the expert opinions of experts who have specialized knowledge on a subject for which numerical determination is performed as background knowledge, converges numerical opinions of collective intelligence by allowing participants who are not related to a person who wants to perform purchase, etc. by the current numerical determination to freely present numerical values by referring to the background knowledge, pays rewards to participants who contribute to the numerical determination in relation to the converged numerical values, and involves expert opinions and compensation regulations, instead of numerical determination based on subjective opinions of participants, so as to allow the participants to converge opinions for the most objective and rational numerical determination. In particular, to this end, there is a need for the invention relating to numerical determination used by modifying and changing the invention of the collective intelligence converging system of Korean Patent Registration No. 10-1804960 (issued on November 29, 2017) of the present applicant.

### SUMMARY OF THE INVENTION

The present invention is to solve the problems of the related art, and an object of the present invention is to provide a numerical determination system and a method thereof for numerical determination of a particular issue, which provides the expert opinions of experts who have specialized knowledge on a subject for which numerical determination is performed as background knowledge, converges numerical opinions of collective intelligence by allowing participants who are not related to a person who wants to perform purchase, etc. by the current numerical determination to freely present numerical values by referring to the background knowledge, pays rewards to participants who contribute to the numerical determination in relation to the converged numerical values, and involves expert opinions and compensation regulations, instead of numerical determination based on subjective opinions of participants, so as to allow the participants to converge opinions for the most objective and rational numerical determination.

### [Technical Solution]

As a technical solution for achieving the object of the present invention, a first aspect of the present invention provides a numerical determination system including: an operation computer which receives an issue requiring a numerical determination so as to converge collective intelligence for performing an objective and rational numerical determination such that a numerical determination is performed, thereby compensating for the collective intelligence having contributed to the numerical determination; a numerical information data storage unit which belongs to the operation computer or is connected via a communication means and stores various data required for the numerical determination performed by the operation computer; a member information data storage unit which belongs to the operation computer or is connected via a communication means and stores member information of a requestor who has subscribed to the operation computer to request a subject for numerical determination and receive the result and member information of a participant in the collective intelligence converging system for compensation based on the result of numerical determination; a requestor terminal which is communication-connected to the operation computer, inputs information about a subject for numerical determination, numerical information for preventing tampering, and compensation information, and the like to transmit the input information to the operation computer, and receives determined numerical information from the operation computer; and a collective intelligence converging system which is communication-connected to the operation computer, and receives, from the operation computer, the information about a subject for numerical determination, the numerical information for preventing tampering, and the compensation information, and the like so as to converge collective intelligence by referring to opinions of experts and opinions of participants, and transmits, to the operation computer, information about the converged numerical values, information about the participants to be compensated, and the like.

A second aspect of the present invention provides a numerical determination method including the steps of: receiving, by means of an operation computer, the corresponding information and the like from a requestor terminal when there are information about a subject for numerical determination and tampering prevention data; transmitting, by means of the operation computer, collective intelligence convergence request data of numerical determination based on the information about the subject for numerical determination to a collective intelligence converging system; providing, by means of a management computer of the collective intelligence converging system, the information about the subject for numerical determination to expert terminals of related expert members; transmitting, by means of at least one expert terminal, to the management computer, numerical values suitable for the subject for numerical determination input by the expert members based on the information about the subject for numerical determination and tampering prevention numerical values having been provided by the management computer or determined by itself together with related expert knowledge; requesting, by means of the management computer, participation in collective intelligence convergence by providing the numerical values of the subject for numerical determination of the experts and the tampering prevention numerical values to participant terminals of participants participating in collective intelligence opinions; transmitting, by means of at least one participant terminal, to the management computer, estimated numerical values of the subject for numerical determination and tampering prevention numerical values determined by referring to the background knowledge input by the participants; calculating, by means of the management computer, an average value of the estimated numerical values of the subject for numerical determination and an average value of the tampering prevention numerical values based on information about the estimated numerical values of the subject for numerical determination and the tampering prevention numerical values of the participants; transmitting, by means of the management computer, to the operation computer, the numerical values of the subject for numerical determination and an average value thereof and the tampering prevention numerical values and an average value thereof; comparing, by means of the operation computer, the tampering prevention numerical values transmitted from the requestor terminal with an average value of the tampering prevention numerical values transmitted from the collective intelligence converging system; requesting, by means of the operation computer, determination of whether to accept an average value of the tampering prevention numerical values transmitted from the collective intelligence converging system to the requestor terminal by transmitting the tampering prevention numerical values transmitted from the requestor terminal when the average value of the tampering prevention numerical values transmitted from the collective intelligence converging system is less than the tampering prevention numerical values transmitted from the requestor terminal; returning, by means of the requestor terminal, to the comparing of the tampering prevention numerical values in case of unacceptable by receiving the request from the operation computer and requesting transmission of numerical information determined by convergence in the collective intelligence converging system to the operation computer in case of acceptable; transmitting, to the requestor terminal, the numerical values of the subject for numerical determination received from the collective intelligence converging system and an average value thereof and the tampering prevention numerical values and an average value thereof as the determined numerical values when the average value of the tampering prevention numerical values transmitted from the collective intelligence converging system is equal to or more than the tampering prevention numerical values transmitted from the requestor terminal; requesting, by means of the operation computer, to the collective intelligence converging system, information about a predetermined number of participants presenting closest numerical values to information about the average value of the converged numerical values transmitted from the collective intelligence converging system, and numerical values thereabove and therebelow; setting, by means of the operation computer, a participants to be compensated according to compensation regulations set based on the information about participants and the numerical information transmitted from the collective intelligence converging system; and allocating, by means of the operation computer, compensation to the set participants to be compensated.

Further, a third aspect of the present invention provides a numerical determination method including the steps of: providing, by means of a requestor terminal, compensation information by setting a condition according to a result of performing a business with respect to the determined numerical information, as compensation to be provided to participants of the collective intelligence converging system participating in the numerical determination when requesting the numerical determination to the operation computer or after receiving the numerical information determined from the operation computer; calculating, by means of the requestor terminal, a business result using the determined numerical information of a subject for numerical determination received from the operation computer; providing, by means of the requestor terminal, corresponding information to the operation computer by checking whether to achieve a condition set for compensation of the calculated business result; providing, by means of the requestor terminal, a compensation profit included in the compensation information to the operation computer with respect to achievement of the condition set for compensation of the business result; calculating, by means of the operation computer, an execution rate for each issue by determining whether to perform the compensation information provided by the requestor terminal; providing, by means of the operation computer, allocation set in the compensation information to the participants with respect to the achievement of the condition set for compensation of the business result; and calculating and storing, by means of the operation computer, reliability of the requestor terminal based on the calculated execution rate with respect to the compensation-related performance of the requestor terminal.

### ADVANTAGEOUS EFFECTS

According to the present invention, in numerical determination of a particular issue, there is an effect capable of allowing a requestor terminal to perform desired numerical determination by providing the expert opinions of experts who have specialized knowledge on a subject for which numerical determination is performed as background knowledge, converging numerical opinions of collective intelligence by allowing participants who are not related to a person who wants to perform purchase, etc. by the current numerical determination to freely present numerical values by referring to the background knowledge, paying rewards to participants who contribute to the numerical determination in relation to the converged numerical values, and involving expert opinions and compensation regulations, instead of numerical determination based on subjective opinions of participants, so as to allow the participants to converge opinions for the most objective and rational numerical determination.

### BRIEF DESCRIPTION OF THE DRAWINGS

FIG. 1 is a schematic configuration diagram of an embodiment of a numerical determination system of the present invention.
FIG. 2 is a schematic configuration diagram of an embodiment of an operation computer which is a main part of the numerical determination system of the present invention.
FIG. 3 is a schematic configuration diagram of an embodiment of a requestor information management unit which is a main part of the embodiment of the operation computer in the numerical determination system of the present invention.
FIG. 4 is a schematic configuration diagram of an embodiment of a tampering prevention information management unit which is a main part of the embodiment of the operation computer in the numerical determination system of the present invention.
FIG. 5 is a schematic configuration diagram of an embodiment of an opinion convergence information management unit which is a main part of the embodiment of the operation computer in the numerical determination system of the present invention.
FIG. 6 is a schematic configuration diagram of an embodiment of a basic compensation information management unit which is a main part of the embodiment of the operation computer in the numerical determination system of the present invention.
FIG. 7 is a schematic configuration diagram of an embodiment of a performance compensation information management unit which is a main part of the embodiment of the operation computer in the numerical determination system of the present invention.
FIG. 8 is a schematic configuration diagram of an embodiment of a numerical information data storage unit which is a main part of the numerical determination system of the present invention.
FIG. 9 is a schematic configuration diagram of an embodiment of a requestor terminal which is a main part of the numerical determination system of the present invention.
FIG. 10 is a schematic configuration diagram of an embodiment of a collective intelligence converging system which is a main part of the numerical determination system of the present invention.
FIG. 11 is an exemplary view for describing numerical determination in the collective intelligence system used in the numerical determination system of the present invention.
FIG. 12 is an exemplary view for describing an embodiment of a basic compensation among compensations of participants who contribute to the numerical determination of the numerical determination system of the present invention.
FIG. 13 is an exemplary view for describing an embodiment of a performance compensation among compensations of participants who contribute to the numerical determination of the numerical determination system of the present invention.
FIG. 14 is a flow chart for describing an embodiment of a numerical determination method of the present invention.
FIG. 15 is a flow chart for describing another embodiment of the numerical determination method of the present invention.

### DETAILED DESCRIPTION OF THE PREFERRED EMBODIMENT

Hereinafter, embodiments of the present invention will be described in detail with reference to the accompanying drawings.

In order to help the understanding of the present invention, terms of the embodiments to be described below will be defined. The present invention is a configuration that utilizes computer hardware and a computer program or a web program or a cloud computer program that is driven by using the resources of the computer hardware. Therefore, in the description of the present invention, the names of hardware and programs utilizing the hardware may be used interchangeably. In other words, each configuration of an operation computer or a management computer may be interchangeably used as a configuration of its own hardware, or each configuration of a computer program or web program that is driven by using the hardware resources of the operating computer or management computer. The terms of a requestor terminal, an expert terminal, and a participant terminal of the present invention may be computer programs or web programs driven by using hardware resources, or may be hardware terminals themselves.

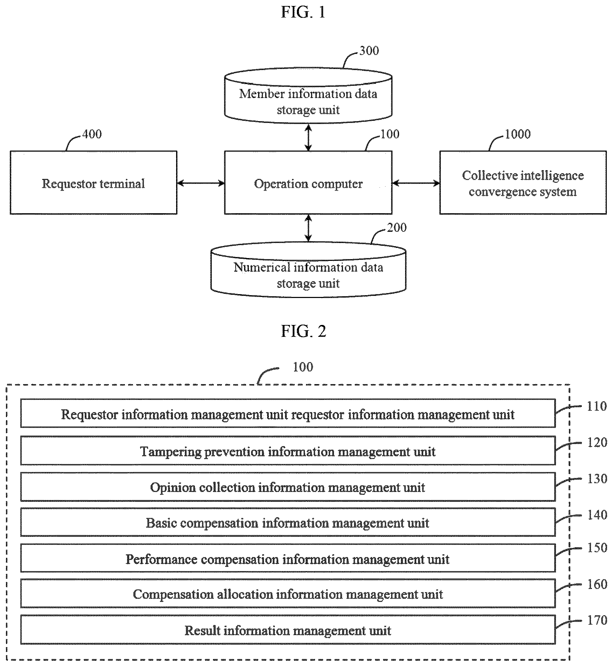

FIG. 1 is a schematic configuration diagram of an embodiment of a numerical determination system of the present invention.

As illustrated in FIG. 1, the numerical determination system of the present invention is a configuration including an operation computer 100 which receives an issue requiring a numerical determination so as to converge collective intelligence for performing an objective and rational numerical determination such that a numerical determination is performed, thereby compensating for the collective intelligence having contributed to the numerical determination; a numerical information data storage unit 200 which belongs to the operation computer 100 or is connected via a communication means and stores various data required for the numerical determination performed by the operation computer 100; a member information data storage unit 300 which belongs to the operation computer 100 or is connected via a communication means and stores member information of a requestor who has subscribed to the operation computer 100 to request a subject for numerical determination and receive the result and member information of a participant in the collective intelligence converging system for compensation based on the result of numerical determination; a requestor terminal 400 which is communication-connected to the operation computer 100, inputs information about a subject for numerical determination, numerical information for preventing tampering, and compensation information, and the like to transmit the input information to the operation computer 100, and receives determined numerical information from the operation computer 100; and a collective intelligence converging system 1000 which is communication-connected to the operation computer 100, and receives, from the operation computer 100, the information about a subject for numerical determination, the numerical information for preventing tampering, and the compensation information, and the like so as to converge collective intelligence by referring to opinions of experts and opinions of participants, and transmits, to the operation computer 100, information about the converged numerical values, information about the participants to be compensated, and the like.

The operation computer 100 may include a communication means, and may be configured as a server computer that may be executed by loading a computer program or a web program.

The numerical information data storage unit 200 and the member information data storage unit 300 may be configured as a database unit included in the operation computer 100, and may also be configured as a database server which communicates with the operation computer 100 via a communication means.

The requestor terminal 400 may be configured as a terminal such as a smartphone, a tablet computer, a notebook computer, and a desktop computer, which includes a means capable of being communication-connected to the operation computer 100 and a means capable of transmitting, to the operation computer 100, information about a subject for numerical determination, compensation information for providing to participants, numerical information for preventing tampering if necessary, and the like.

A detailed configuration of the collective intelligence converging system 1000 will be described below.

FIG. 2 is a schematic configuration diagram of an embodiment of an operation computer which is a main part of the numerical determination system of the present invention.

As illustrated in FIG. 2, the operation computer of the present invention is a configuration which includes a requestor information management unit 110 for receiving, storing, and managing information about a subject for numerical determination, compensation information to be provided to participants contributing to the numerical determination, numerical information for preventing tampering when there is a tampering prevention numerical value, and the like, which are transmitted from the requestor terminal; a tampering prevention information management unit 120 for receiving, storing, and managing the minimum number of participants capable of preventing tampering of the numerical determination in converging opinions required for numerical determination, which are transmitted from the requestor terminal or set in the operation computer; an opinion convergence information management unit 130 for receiving and managing results of converging collective intelligence opinions related to numerical determination which are transmitted from the collective intelligence converging system 1000; a basic compensation information management unit 140 for managing a basic compensation amount provided by the requestor terminal in exchange for numerical determination, and a numerical range to be compensated and information about participants to be compensated associated with the determined numerical values; a performance compensation information management unit 150 for managing compensation information set by the determination of the requestor terminal, and managing compensation regulations according to a business performance based on the numerical values determined by the collective intelligence converging system; a compensation allocation information management unit 160 for managing compensation payment allocation information for participants to be compensated for basic compensation or performance compensation; and a result information management unit 170 for storing and managing the determined numerical values and compensation result information of the subject for numerical determination which are transmitted from the collective intelligence converging system.

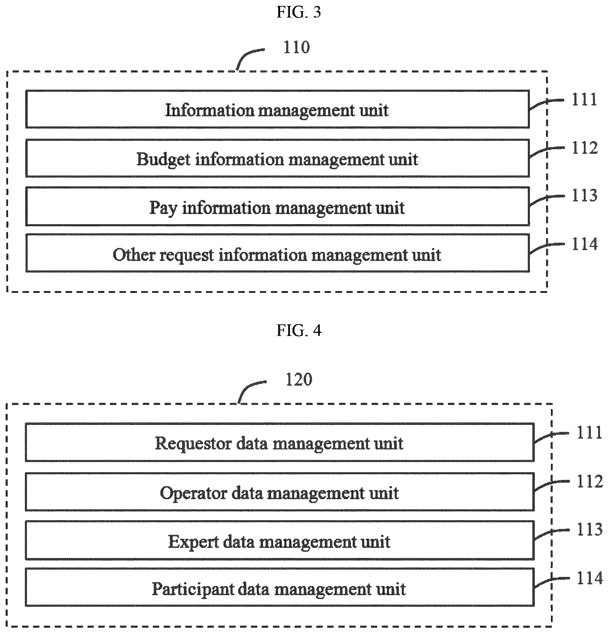

FIG. 3 is a schematic configuration diagram of an embodiment of a requestor information management unit which is a main part of the operation computer in the numerical determination system of the present invention.

As illustrated in FIG. 3, the requestor information management unit 110 of the present invention is a configuration which includes a price information management unit 111 that receives and stores goods and price information including detailed information about goods and price information about possible related goods to request price determination of the goods when the subject for numerical determination is goods; a budget information management unit 112 that receives and stores construction and budget information, including detailed information of related construction and price information of possible similar related constructions, in order to request the determination of the budget when a subject for numerical determination such as construction, etc. is a budget related to construction, such as construction, civil engineering or equipment; a pay information management unit 113 that receives and stores detailed information about a company, pay information about competing companies, and the like to request the determination of the pay when the a subject for numerical determination such as construction, etc. is related to pays such as a company's annual salary; and an other request information management unit 114 that receives and stores a variety of information required for numerical determination other than the price of the goods, the construction-related budget, and the pays of the company.

FIG. 4 is a schematic configuration diagram of an embodiment of a tampering prevention information management unit which is a main part of the embodiment of the operation computer in the numerical determination system of the present invention.

As illustrated in FIG. 4, the tampering prevention information management unit 120 of the present invention is a configuration which includes a requestor data management unit 121 for receiving, from the requestor terminal, storing, and managing the minimum number of participants capable of preventing intentional tampering of numerical values of participants in the process of converging collective intelligence when the numerical determination is requested to the collective intelligence converging system by the request of the requestor terminal; an operator data management unit 122 for setting the minimum number of participants capable of preventing intentional tampering of numerical values of participants in the process of converging collective intelligence by the operator computer to transmit and manage the set minimum number of participants to the collective intelligence converging system when the numerical determination is requested to the collective intelligence converging system by the request of the requestor terminal; an expert data management unit 123 for receiving, from the collective intelligence converging system, and managing the minimum number of participants capable of preventing intentional tampering of numerical values of participants in the process of converging collective intelligence which has been transmitted from the expert terminal communication-connected to the collective intelligence converging system when the numerical determination is requested to the collective intelligence converging system by the request of the requestor terminal; and a participant data management unit 124 for receiving, from the collective intelligence converging system, and managing the minimum number of participants capable of preventing intentional tampering of numerical values of participants in the process of converging collective intelligence which has been transmitted from the participant terminal communication-connected to the collective intelligence converging system when the numerical determination is requested to the collective intelligence converging system by the request of the requestor terminal.

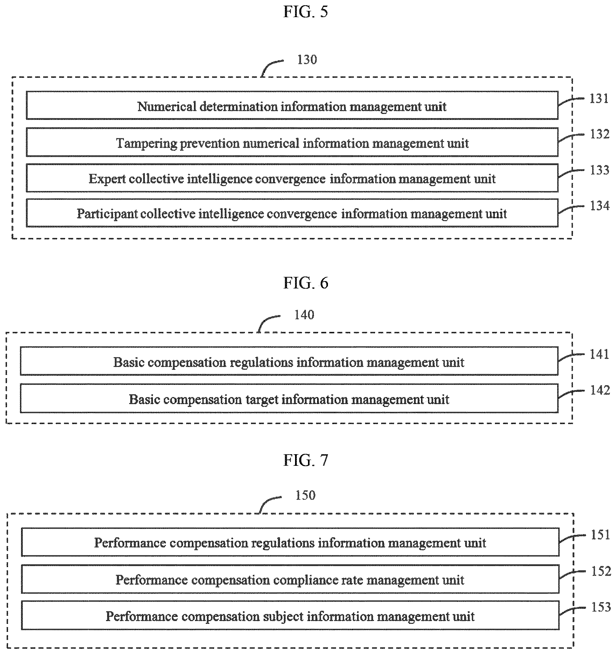

FIG. 5 is a schematic configuration diagram of an embodiment of an opinion convergence information management unit which is a main part of the embodiment of the operation computer in the numerical determination system of the present invention.

As illustrated in FIG. 5, the opinion convergence information management unit 130 of the present invention is a configuration which includes a numerical determination information management unit 131 for managing numerical information to be transmitted to the requestor terminal by receiving a numerical value determined as an average value related to the collective intelligence of the participants which has been transmitted from the collective intelligence converging system; a tampering prevention numerical information management unit 132 for storing and managing tampering prevention numerical values as the minimum number of participants required to prevent the tampering of the numerical values according to opinions of the participants related to the collective intelligence which have been transmitted from the requestor terminal, tampering prevention numerical values set by the operator computer, or tampering prevention numerical values provided by the participants; an expert collective intelligence convergence information management unit 133 for receiving, storing, and managing numerical opinions of experts on a subject for numerical determination which have been transmitted from the collective intelligence converging system; and a participant collective intelligence convergence information management unit 134 for receiving, storing, and managing numerical opinions of participants on a subject for numerical determination which have been transmitted from the collective intelligence converging system.

FIG. 6 is a schematic configuration diagram of an embodiment of a basic compensation information management unit which is a main part of the embodiment of the operation computer in the numerical determination system of the present invention.

As illustrated in FIG. 6, the basic compensation information management unit 140 of the present invention is a configuration which includes a compensation information management unit 141 for storing and managing compensation regulations and total compensation amount information to the participants who contributed to the numerical determination of the subject for numerical determination transmitted by the requestor terminal; and a basic compensation target information management unit 142 for calculating a subject and conditions for basic compensation by receiving determined numerical information transmitted from the collective intelligence converging system and information about participants contributing thereto.

FIG. 7 is a schematic configuration diagram of an embodiment of a performance compensation information management unit which is a main part of the operation computer in the numerical determination system of the present invention.

As illustrated in FIG. 7, the performance compensation information management unit 150 of the present invention is a configuration which includes a performance compensation information management unit 151 for storing and managing compensation regulations and total compensation amount information according to a business execution result presented by the requestor terminal with respect to the numerical values on the subject for numerical determination provided by the operation computer; a performance compensation compliance rate management unit 152 for managing reliability information of a requestor by checking the compliance rate of the compensation regulations according to a business execution result provided by the requestor terminal; and a performance compensation subject information management unit 153 for calculating compensation according to the compensation regulations based on the numerical values and information about participants contributing thereto when the business execution result presented by the requestor terminal is matched with the compensation regulations.

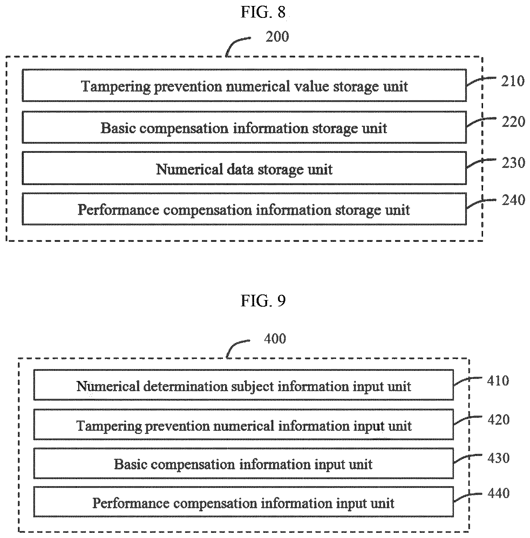

FIG. 8 is a schematic configuration diagram of an embodiment of a numerical information data storage unit which is a main part of the numerical determination system of the present invention.

As illustrated in FIG. 8, the numerical information data storage unit 200 of the present invention is a configuration which includes a tampering prevention numerical value storage unit 210 for storing data on the minimum number of participants capable of preventing tampering of the data in the case of using convergence of collective intelligence for the numerical determination presented by experts or participants of the requestor terminal 400, the operation computer 100, or the collective intelligence converging system 1000; a basic compensation information storage unit 220 for storing data on compensation and compensation conditions to be provided to participants participating in the collective intelligence converging system 100 contributing to the numerical determination presented by the requestor terminal 400; a numerical data storage unit 230 for storing final converged numerical data and converged total numerical data information transmitted from the collective intelligence converging system 1000; and a performance compensation information storage unit 240 for storing a compensation amount and compensation regulations in a relationship between the result of performing the business related to the subject for numerical determination presented from the requestor terminal 400 and the numerical values provided by the operation computer.

FIG. 9 is a schematic configuration diagram of an embodiment of a requestor terminal which is a main part of the numerical determination system of the present invention.

As illustrated in FIG. 9, the requestor terminal 400 of the present invention is a configuration which includes a numerical determination subject information input unit 410 for inputting information on a subject for numerical determination to transmit the information to the operation computer; a tampering prevention numerical information input unit 420 for inputting data on the minimum number of participants capable of preventing tampering of the numerical data in the collective intelligence converging system related to the numerical determination to provide the input data to the operation computer; a basic compensation information input unit 430 for inputting a compensation and compensation regulations to be provided to the participants contributing to the numerical values determined in the collective intelligence converging system related to the numerical determination to the compensation and compensation regulations to the operation computer; and a performance compensation information input unit 440 for inputting a compensation and compensation regulations according to the business performance result with respect to the numerical data of the subject for numerical determination converged from the collective intelligence converging system by the operation computer to transmit the compensation and compensation regulations to the operation computer.

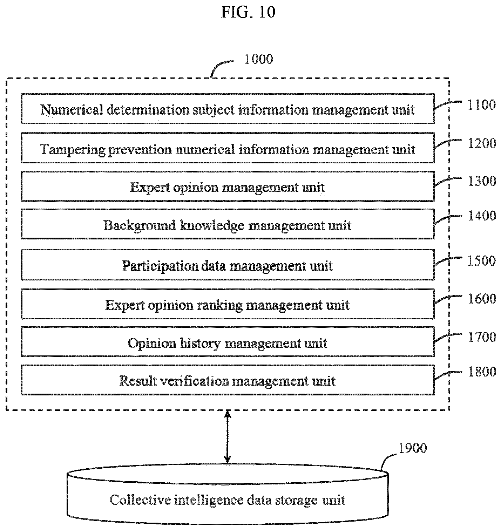

FIG. 10 is a schematic configuration diagram of an embodiment of a collective intelligence converging system which is a main part of the numerical determination system of the present invention.

The collective intelligence converging system 1000, which is the main part of the numerical determination system of the present invention, is an invention already disclosed in the registered patent of the present applicant. In the disclosed collective intelligence converging system, there is a configuration of presenting pros and cons of the participants and scores thereto based on background knowledge. However, the present invention is characterized to present rational and objective numerical values of the participants based on background knowledge and compensation information of experts and the like by receiving information on the subject for numerical determination and compensation information provided by the operation computer of the system of the present invention from the collective intelligence converging system when using the disclosed collective intelligence converging system for the subject for numerical determination set by the collective intelligence convergence of the present invention. To this end, there is presented a configuration to derive convergence data of the collective intelligence on an issue, which includes a management computer for providing and converging data to a participating terminal; at least one expert terminal for accessing the management computer using a communication means and providing expert opinion data input by experts on the presented issue; at least one participant terminal for accessing the management computer using a communication means, reading the expert opinion data of experts on the presented issue by the participants, and providing opinions of the participants on the expert opinions; a data storage unit which is included in the management computer or connected via a communication means and stores data provided to converge the collective intelligence to the expert terminal and the participant terminal, the expert opinion data, and the participant opinion data; and a member information storage unit which is included in the management computer or connected via a communication means and stores information about expert members and information about participant members.

As illustrated in FIG. 10, the collective intelligence converging system 1000 of the present invention is a configuration which includes a numerical determination subject information management unit 1100 for receiving, storing, and managing detailed information about the subject for numerical determination transmitted from the operation computer 100; a tampering prevention numerical information management unit 1200 for managing tampering prevention numerical data presented by the operation computer 100 or an expert or a participant; an expert opinion management unit 1300 for receiving and storing expert opinion data of opinions of experts including numerical values of experts on the subject for numerical determination and tampering prevention numerical values and at least one basis, explanation, etc. on the opinions thereof, participated and transmitted by at least one expert on the proposed numerical determination-related issue; a background knowledge management unit 1400 which provides at least one expert opinion data received by the expert opinion management unit 1300 to the participants to store separately at least one required reading opinion data and at least one optional reading opinion data on each of the opinions related to the presented numerical values of the expert opinion data and the tampering prevention numerical values and provides, to at least one participant, the required reading opinion data and the optional reading opinion data on the stored numerical values of experts and tampering prevention numerical values as background knowledge on the numerical determination of the subject for numerical determination; a participation data management unit 1500 which reads the required reading opinion data and the optional reading opinion data on each of the numerical values and tampering prevention numerical values provided from the background knowledge management unit 1400, and receives and stores collective intelligence data including numerical values and tampering prevention numerical values for the input subject for numerical determination; an expert opinion ranking management unit 1600 which determines a ranking based on the collective intelligence data stored in the participation data management unit 1500, and updates the required reading opinion data and the optional reading opinion data based on the ranking to provide the updated data to the background knowledge management unit 1400; a minority opinion management unit 1700 that receives the agreement of a small number of participants, but assigns a ranking up position to an opinion with a high score; an opinion history management unit 1700 which provides information about the source of the corresponding opinion data and counter-arguments or supplemental opinions so as to easily recognize some context on whether the corresponding opinion comes from any context and situation, when many opinions are complicatedly present in the process in which the participants read the required reading opinion data and the optional reading opinion data; and a result verification management unit 1800 which generates a report in a format set based on the collective intelligence data stored in the participation data management unit 1500 and provides the generated report to the operation computer 100 providing the issue.

An operation of the collective intelligence converging system for determining numerical values of the subject for numerical determination by convergence of collective intelligence used in the numerical determination system of the present invention will be described.

The management computer of the collective intelligence converging system 1000 of the present invention inquires at least one expert of the corresponding field from an expert pool on an issue related to the received subject for numerical determination to transmit a request for presenting opinions related to the issue to the expert terminal. In this case, if the operation computer 100 may provide the corresponding tampering prevention numerical information when including the tampering prevention numerical information in the issue together with the information about the subject for numerical determination. The experts perform expert authentication by accessing the management computer using the expert terminal. When the management computer provides an expert opinion presentation form to the expert terminal of experts who have completed expert authentication, the expert terminal transmits to the management computer expert opinion data including numerical values on the issue or tampering prevention numerical opinions and basis and explanatory data thereof input by the experts in the opinion presentation form provided from the management computer. The management computer stores expert opinion data of numerical determination opinions on the issue transmitted from the expert terminal. The management computer exposes numerical determination information related to the issue to the participant terminals of the participant members. When the participant terminal accesses the management computer to perform participant authentication, the management computer provides a predetermined number of expert data related to the issue to the participant terminals of the participants whose participant authentication has been completed. The management computer transmits participant opinion data including separate opinion data to the management computer when agree or disagree data on the expert opinion data related to the issue input by the participants, related score data, and separate opinions of the participants are presented. The management computer assigns a ranking to the expert opinion data based on the participant opinion data transmitted from the participant terminal to determine a predetermined number of high-ranking expert opinion data as required reading opinion data, and determines expert opinion data not included in the required reading opinion data and separate opinion data of the participants as optional reading opinion data to store the determined data as background knowledge data. The management computer exposes numerical determination information related to the issue to the participant terminals of the participant members. When the participant terminal accesses the management computer to perform participant authentication, the management computer provides the background knowledge data related to the issue to the participant terminals of the participants whose participant authentication has been completed. The management computer transmits to the management computer participant opinion data including agreement and disagreement data about required reading opinion data and optional reading opinion data on the issue, and score data related thereto included in the background knowledge data input by the participants. The management computer checks whether the presentation of the opinions of the participants who participated in the presentation of the opinions has been terminated, and checks whether there is a change in the ranking of the required reading opinion data and the optional reading opinion data based on the participant opinion data while continuously receiving the opinion presentation of the participants when the management computer checks that the presentation of the opinions of the participants is not terminated. When the management computer checks that there is a change in the ranking of the required reading opinion data and the optional reading opinion data, the management computer changes the required reading opinion data and the optional reading opinion data themselves or their rankings to provide the change to the participant terminal. When the management computer checks that the presentation of the opinions of the participants is terminated, the management computer derives collective intelligence convergence data based on the received participant opinion data.

The configuration and operation of the collective intelligence converging system used in the above-described embodiment of the present invention are not limited thereto. It goes without saying that various transformational models included in the technical idea of the collective intelligence converging system may be used.

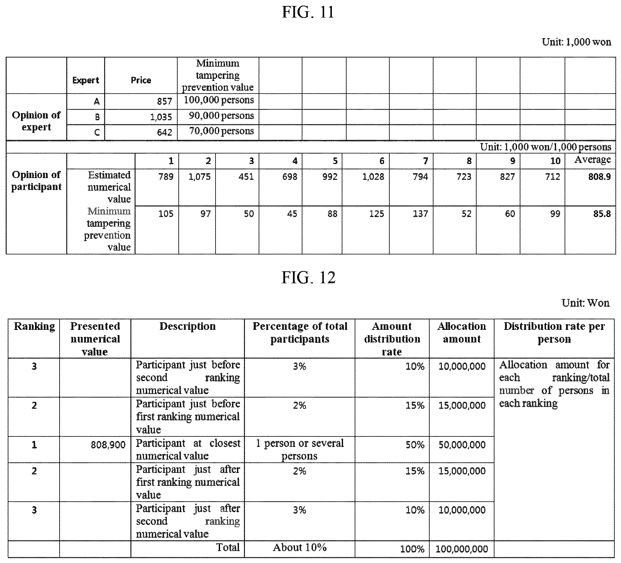

FIG. 11 is an exemplary view for describing numerical determination in the collective intelligence system used in the numerical determination system of the present invention.

As illustrated in FIG. 11, the numerical determination in the collective intelligence converging system of the present invention is an example of inquiring opinions from related experts, for example, three experts A, B, and C based on various information on a new cell phone provided by a requestor and price information on similar products of competitors, in determining a price (consumer price) of information about a subject for numerical determination, for example, a new mobile phone of a parent company that is the requestor. For the subject for numerical determination, the expert A presented 875,000 won for a consumer price and 100,000 for the minimum number of participants for preventing tampering of numerical values of participants in numerical determination, the expert B presented 1,035,000 won for a consumer price and 90,000 for the minimum number of participants, and the expert C presented 642,000 won for a consumer price and 70,000 for the minimum number of participants. In this case, although not illustrated, expert opinion data, such as background explanations on the prices and minimum values for tampering prevention presented by the experts A, B, and C, are naturally included.

The collective intelligence converging system converges opinions of the participants by providing the background knowledge and compensation regulations for the result for converging collective intelligence provided by the requestor to terminals of participants registered as participant members in the collective intelligence converging system by using the expert opinion data on the price of the new mobile phone and the minimum value of tampering prevention as background knowledge. In this case, some of the participants will present numerical values based on purely subjective judgment about the price of the new mobile phone, but most of the participants refer to the background knowledge of the experts and the provided compensation regulations, so that subjectivity of participants is largely excluded and presentation of numerical values may be converged close to the expert opinions.

The participants also present an estimated price of the new mobile phone and the minimum number of persons capable of preventing tampering of numerical values. The example of FIG. 11 illustrates an example in which the intelligence of 10 participants is converged. The average price of 10 mobile phones is 808,900 won, and the average value of the minimum number of persons for tampering prevention is 85,800, which is an example of converging collective intelligence opinions. In the example, for convenience of explanation, the estimated price of the mobile phone and the minimum number of persons for tampering prevention are presented only up to a unit of 100 won, but the present invention is not limited thereto. The units of the amount and the numerical value may be used up to a 1-won unit and up to a decimal point or more.

In the process of converging the collective intelligence on the price of the mobile phone in the collective intelligence converging system, when the requestor presents the minimum number of participants for tampering prevention, for example, the requestor presented the minimum number of persons for tampering prevention as 100,000. When the minimum number of persons for tampering prevention converged in the collective intelligence converging system is 85,800, the operation computer of the numerical determination system of the present invention may check whether to accept the opinions of collective intelligence determined by the collective intelligence converging system, the mobile phone price of 808,900 won, and the minimum number of persons for tampering prevention of 85,800, even if the minimum number of persons for tampering prevention presented by the requestor is less than 100,000, which are presented by the requestor terminal. When the requestor accepts the mobile phone price of 808,900 won and the minimum number of persons for tampering prevention of 85,800 which are numerical values presented by the operation computer, the numerical value of the mobile phone price of 808,900 won is determined as it is. When the requestor expresses the intention not to accept it, the operation computer continues to converge the collective intelligence of the participants until the minimum number of persons for tampering prevention reaches 100,000 persons presented by the requestor. Finally, when the numerical determination of the mobile phone price is completed when the minimum number of persons for tampering prevention reaches 100,000 persons, the operation computer provides the finally determined mobile phone price to the requestor terminal, and allocates compensation to the participants who contributed to the numerical determination by applying compensation regulations.

FIG. 12 is an exemplary view for describing an embodiment of a basic compensation among compensations of participants who contribute to the numerical determination of the numerical determination system of the present invention.

As illustrated in FIG. 12, the basic compensation of the present invention is a compensation to be compulsorily provided by the requestor, and it is preferred that the requestor set a certain amount as compensation and deposit the amount in the operation computer. The regulations of the basic compensation may target at least one participant who accurately matches the final determined value (mobile phone price) and participants who provide the closest numerical value among numerical values above and below the final determined numerical value. In this case, it is possible to set the total number of participants to be compensated. For example, 10% of the participants participating in the collective intelligence converging system may be set as a subject for basic compensation.

In FIG. 12, when the requestor sets, for example, 100 million won as the basic compensation for numerical determination, if the mobile phone price determined by the final numerical determination is 808,900 won, among the participants, at least one participant who presented the mobile phone price of 808,900 won is set as a first ranking, and for example, the first ranking distribution rate is set at 50%, and 50,000,000 won is allocated to the first ranking participant as the compensation. In addition, as the amount more than and less than the first ranking price, a second ranking and a third ranking are set in the order closest to the first ranking price, and for example, the second ranking distribution rate of the total compensation amount to the second ranking is set at 15% and 15,000,000 won may be allocated to the second ranking participant as the compensation, and the third ranking distribution rate of the total compensation amount to the third ranking is set at 10% and 10,000,000 won may be allocated to the third ranking participant as the compensation. Here, the amount of compensation allocated per participant for each ranking may be the amount obtained by dividing the amount of compensation allocated for the corresponding ranking by the number of corresponding participants.

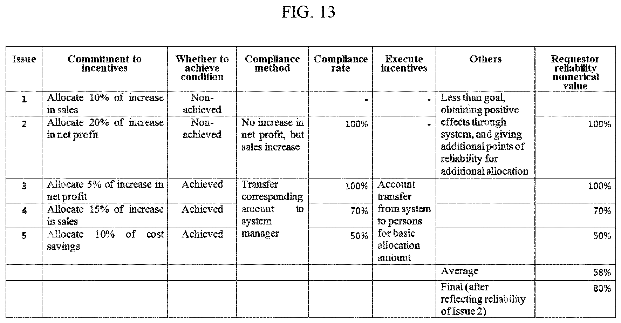

FIG. 13 is an exemplary view for describing an embodiment of performance compensation among compensations of participants who contribute to the numerical determination of the numerical determination system of the present invention.

As illustrated in FIG. 13, the performance compensation of the present invention may be a configuration which is operated to be self-set by the requestor and voluntarily performed, but manages the performance compensation execution rate and reliability of the requestor by checking whether or not the performance has been achieved in the system of the present invention. For example, when the business is performed using the numerical value (mobile phone price) finally determined in the collective intelligence converging system and the requestor achieves an object set for each issue, like the basic compensation, the performance compensation may be configured to pay compensation to participants in the first to third rankings of numerical determination.

In FIG. 13, the requestor sets Issues 1 to 5 for the result of performing the business related to the numerical determination. For example, Issue 1 has been set to allocate 10% of the increase in sales as performance compensation, Issue 2 has been set to allocate 20% of the increase in net profit as performance compensation, Issue 3 has been set to allocate 5% of the increase in net profit as performance compensation, Issue 4 has been set to allocate 15% of the increase in sales as performance compensation, and Issue 5 has been set to allocate 10% of cost savings as performance compensation. In an example of FIG. 13, in Issue 1, it was determined that the condition was not achieved, and Issue 2 is a case where the condition is not achieved, but there was no increase in net profit, but sales increased, and the execution rate of the requestor for performance compensation was calculated as 100%. In Issue 3, since the condition is achieved, the requestor needs to transfer a promised performance compensation amount to the operation computer of the present invention, and the execution rate of the requestor is calculated as 100%, so that the operation computer pays the performance compensation to participants of the allocation of basic compensation. In Issue 4, since the condition is achieved, the requestor needs to transfer a promised performance compensation amount to the operation computer of the present invention, and the execution rate of the requestor is calculated as 70%, so that the operation computer pays the performance compensation to participants of the allocation of basic compensation. In Issue 5, since the condition is achieved, the requestor needs to transfer a promised performance compensation amount to the operation computer of the present invention, and the execution rate of the requestor is calculated as 50%, so that the operation computer pays the performance compensation to participants of the allocation of basic compensation.

In this case, the operation computer may calculate an average value by calculating the execution rate of the requestor, and reflect the average value as the reliability of the requestor.

The process of the numerical determination system of the present invention described above, and an example of calculating the result will be described as an example of determining a price of a mobile phone as a new product. In addition, it is natural that various cases requiring rational and objective factors may be applied to numerical determination, such as construction budgets, employment expansion of companies, and wages of the companies.

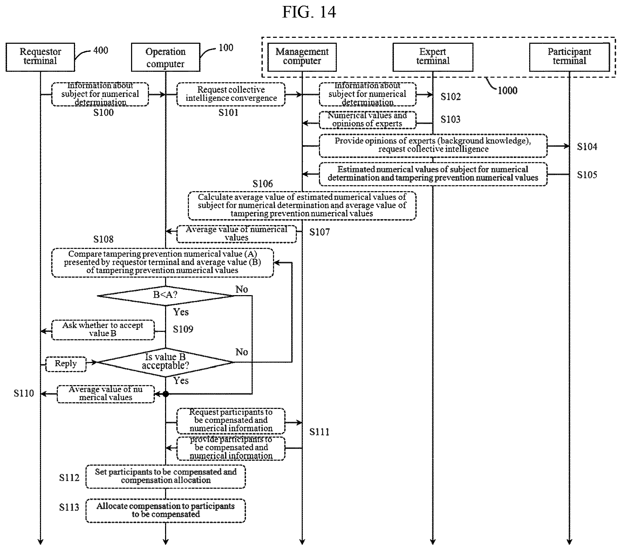

FIG. 14 is a flow chart for describing an embodiment of a numerical determination method of the present invention.

As illustrated in FIG. 14, the numerical determination method of the present invention is a configuration which includes the steps of: receiving, by means of an operation computer, the corresponding information and the like from a requestor terminal when there are information about a subject for numerical determination and tampering prevention data (S 100);
transmitting, by means of the operation computer, collective intelligence convergence request data of numerical determination to a collective intelligence converging system based on the information about the subject for numerical determination (S101);
providing, by means of a management computer of the collective intelligence converging system, the information about the subject for numerical determination to expert terminals of related expert members (S102);
transmitting, by means of at least one expert terminal, to the management computer, numerical values suitable for the subject for numerical determination input by the expert members based on the information about the subject for numerical determination and tampering prevention numerical values having been provided by the management computer or determined by itself together with related expert knowledge (S103);
requesting, by means of the management computer, participation in collective intelligence convergence by providing the numerical values of the subject for numerical determination of the experts and the tampering prevention numerical values to participant terminals of participants participating in collective intelligence opinions (S104);
transmitting, by means of at least one participant terminal, to the management computer, estimated numerical values of the subject for numerical determination and tampering prevention numerical values determined by referring to the background knowledge input by the participants (S105);
calculating, by means of the management computer, an average value of the estimated numerical values of the subject for numerical determination and an average value of the tampering prevention numerical values based on information about the estimated numerical values of the subject for numerical determination and the tampering prevention numerical values of the participants (S106);
transmitting, by means of the management computer, to the operation computer, the numerical values of the subject for numerical determination and an average value thereof and the tampering prevention numerical values and an average value thereof (S 107);
comparing, by means of the operation computer, the tampering prevention numerical values transmitted from the requestor terminal with an average value of the tampering prevention numerical values transmitted from the collective intelligence converging system (S108);
requesting, by means of the operation computer, determination of whether to accept an average value of the tampering prevention numerical values transmitted from the collective intelligence converging system to the requestor terminal by transmitting the tampering prevention numerical values transmitted from the requestor terminal when the average value of the tampering prevention numerical values transmitted from the collective intelligence converging system is less than the tampering prevention numerical values transmitted from the requestor terminal (S109);
returning, by means of the requestor terminal, to step S108 in case of unacceptable by receiving the request from the operation computer and transmitting, to the requestor terminal, the numerical values of the subject for numerical determination received from the collective intelligence converging system and an average value thereof and the tampering prevention numerical values and an average value thereof as the determined numerical values in case of acceptable or when the average value of the tampering prevention numerical values transmitted from the collective intelligence converging system is equal to or more than the tampering prevention numerical values transmitted from the requestor terminal (S 110);
requesting, by means of the operation computer, to the collective intelligence converging system, information about a predetermined number of participants presenting closest numerical values to information about the average value of the converged numerical values transmitted from the collective intelligence converging system, and numerical values thereabove and therebelow (Sill);
setting, by means of the operation computer, a participants to be compensated according to compensation regulations set based on the information about participants and the numerical information transmitted from the collective intelligence converging system (S112); and
allocating, by means of the operation computer, compensation to the set participants to be compensated (S113).

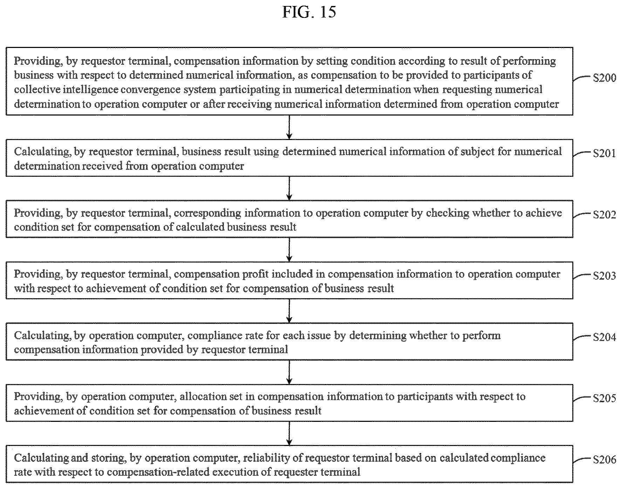

FIG. 15 is a flow chart for describing another embodiment of the numerical determination method of the present invention. As illustrated in FIG. 15, the numerical determination method of the present invention is a configuration which includes the steps of: providing, by means of a requestor terminal, compensation information by setting a condition according to a result of performing a business with respect to the determined numerical information, as compensation to be provided to participants of the collective intelligence converging system participating in the numerical determination when requesting the numerical determination to the operation computer or after receiving the numerical information determined from the operation computer (S200);
calculating, by means of the requestor terminal, a business result using the determined numerical information of a subject for numerical determination received from the operation computer (S201);
providing, by means of the requestor terminal, corresponding information to the operation computer by checking whether to achieve a condition set for compensation of the calculated business result (S202);
providing, by means of the requestor terminal, a compensation profit included in the compensation information to the operation computer with respect to achievement of the condition set for compensation of the business result (S203);
calculating, by means of the operation computer, an execution rate for each issue by determining whether to perform the compensation information provided by the requestor terminal (S204);
providing, by means of the operation computer, allocation set in the compensation information to the participants with respect to the achievement of the condition set for compensation of the business result (S205); and
calculating and storing, by means of the operation computer, reliability of the requestor terminal based on the calculated execution rate with respect to the compensation-related execution of the requestor terminal (S206).

The embodiments of the present invention described above are only some of the various embodiments of the present invention. The numerical determination of the present invention is performed by using the opinions of the experts of the collective intelligence converging system by receiving information required for the numerical determination of the present invention and the opinions of participants converged using the expert opinions as background knowledge. In the numerical determination, basically, the participants know the compensation regulations provided by the requestor and the minimum number of participants in which tampering of numerical values is impossible is included in the numerical determination as a condition of the numerical determination. Accordingly, it is natural that various embodiments included in the technical idea of the present invention for securing rational and objective numerical determination are included in the protective scope of the present invention.

## Claims

1. A numerical determination system comprising: an operation computer, which receives an issue requiring a numerical determination so as to converge collective intelligence for performing an objective and rational numerical determination such that a numerical determination is performed, thereby compensating for the collective intelligence having contributed to the numerical determination;
a requestor terminal, which is communication-connected to the operation computer, inputs information about a subject for numerical determination, numerical information about the minimum number of persons for preventing tampering, and compensation information, and the like to transmit the input information to the operation computer, and receives determined numerical information from the operation computer; and
a collective intelligence converging system, which is communication-connected to the operation computer, and receives, from the operation computer, the information about a subject for numerical determination, the numerical information about the minimum number of persons for preventing tampering, the compensation information, and the like so as to converge collective intelligence of participants participating in the numerical determination by having, as background knowledge, opinions of the experts and using an average of values presented by participants who are not restricted to the determined numerical values or an average of similar cases, and transmits, to the operation computer, information about the converged numerical values, information about the participants to be compensated, and the like,
wherein the compensation information includes basic compensation provided by the requestor requesting the numerical determination before the numerical determination and provided to the participants who contributed to the numerical determination.

2. The numerical determination system of claim 1, wherein the operation computer comprises a requestor information management unit configured to receive information about a subject for numerical determination and compensation information provided by the requestor terminal to transmit and manage the received information to the collective intelligence converging system; a tampering prevention information management unit configured to store the minimum number of participants capable of preventing tampering of the numerical determination provided by the requestor terminal and compare the stored minimum number of participants with tampering prevention numerical values received from the collective intelligence converging system; and a basic compensation information management unit configured to manage compensation information of participants participating in the collective intelligence converging system according to compensation regulations presented by the requestor terminal.

3. The numerical determination system of claim 1 or 2, wherein the collective intelligence converging system provides the compensation information presented by the requestor terminal to the participants by using at least one expert opinion including numerical opinions of the subject for numerical determination and the minimum number of persons for tampering prevention as background knowledge and the participants provide the numerical values of the subject for numerical determination and the minimum number of persons for tampering prevention to the collective intelligence converging system as the collective intelligence based on the background knowledge and the compensation information.

4. The numerical determination system of claim 3, wherein the collective intelligence converging system calculates an average value of the numerical values of the subject for numerical determination provided by the participants and an average value of the minimum number of persons for tampering prevention, respectively, to provide the average values to the operation computer.

5. The numerical determination system of claim 4, wherein the operation computer compares the average value of the minimum number of persons for tampering prevention transmitted from the collective intelligence converging system with the minimum number of persons for tampering prevention presented by the requestor terminal when receiving the numerical information of the minimum number of persons for tampering prevention from the requestor terminal, to inquire whether the requestor terminal accepts an average value of the minimum numbers of persons for tampering prevention less than the minimum number of persons for tampering prevention when the average value of the minimum numbers of persons for tampering prevention transmitted from the collective intelligence converging system is less than the minimum number of persons for tampering prevention presented by the requestor terminal.

6. The numerical determination system of claim 1, wherein the compensation information is selectively provided by the requestor and further includes performance compensation provided to the participants who contributed to the numerical determination according to the result of performing the business with respect to the determined numerical information.

7. The numerical determination system of claim 6, wherein the operation computer further includes a performance compensation information management unit configured to be selectively provided by the requestor and provide performance compensation to the participants who contributed to the numerical determination according to the result of performing the business with respect to the determined numerical information.

8. The numerical determination system of claim 2, wherein the basic compensation information management unit sets participants to be compensated among all participants participating in the numerical determination at a predetermined ratio.

9. A numerical determination method comprising the steps of: receiving, by means of an operation computer, corresponding information from a requestor terminal when there are information about a subject for numerical determination, numerical information of the minimum number of persons for tampering prevention, and compensation information;
transmitting, by means of the operation computer, collective intelligence convergence request data of numerical determination based on the information about the subject for numerical determination to a collective intelligence converging system;
providing, by means of a management computer of the collective intelligence converging system, the information about the subject for numerical determination to expert terminals of related expert members;
transmitting, by means of at least one expert terminal, to the management computer, numerical values suitable for the subject for numerical determination input by the expert members based on the information about the subject for numerical determination and numerical values of the minimum number of persons for tampering prevention determined by itself together with related expert knowledge;
requesting, by means of the management computer, participation in collective intelligence convergence by providing the numerical values of the subject for numerical determination of the experts and the numerical values of the minimum number of persons for tampering prevention as background knowledge to participant terminals of participants participating in collective intelligence opinions;
transmitting, by means of at least one participant terminal, estimated numerical values of the subject for numerical determination and numerical values of the minimum number of persons for tampering prevention determined by using the average of the values presented by the participants who are not restrained to the determined numerical values or an average of similar cases by referring to the background knowledge input by the participants, to the management computer;
calculating, by means of the management computer, an average value of the numerical values of the subject for numerical determination and an average value of the numerical values of the minimum number of persons for tampering prevention based on information about the estimated numerical values of the subject for numerical determination and the numerical values of the minimum number of persons for tampering prevention of the participants; and
transmitting, by means of the management computer, to the operation computer, the numerical values of the subject for numerical determination and an average value thereof and the numerical values of the minimum number of persons for tampering prevention and an average value thereof,
wherein the compensation information includes basic compensation provided by the requestor requesting the numerical determination before the numerical determination and provided to the participants who contributed to the numerical determination.

10. The numerical determination method of claim 9, further comprising the steps of: comprising, by means of the operation computer, the numerical values of the minimum number of persons for tampering prevention transmitted from the requestor terminal with an average value of the numerical values of the minimum number of persons for tampering prevention transmitted from the collective intelligence converging system;
requesting, by means of the operation computer, determination of whether to accept an average value of the numerical values of the minimum number of persons for tampering prevention transmitted from the collective intelligence converging system to the requestor terminal by transmitting the tampering prevention numerical values transmitted from the requestor terminal when the average value of the numerical values of the minimum number of persons for tampering prevention transmitted from the intelligence converging system is less than the numerical values of the minimum number of persons for tampering prevention transmitted from the requestor terminal; and
performing, by means of the requestor terminal, continuously the collective intelligence convergence of the participants in case of unacceptable by receiving the request from the operation computer and transmitting, to the requestor terminal, the numerical values of the subject for numerical determination received from the collective intelligence converging system and an average value thereof and the tampering prevention numerical values and an average value thereof as the determined numerical values in case of acceptable or when the average value of the numerical values of the minimum number of persons for tampering prevention transmitted from the collective intelligence converging system is equal to or more than the numerical values of the minimum number of persons for tampering prevention transmitted from the requestor terminal.

11. The numerical determination method of claim 9 or 10, further comprising the steps of: requesting, by means of the operation computer, to the collective intelligence converging system, information about a predetermined number of participants presenting closest numerical values to information about the average value of the converged numerical values transmitted from the collective intelligence converging system, and numerical values thereabove and therebelow;
setting, by means of the operation computer, participants to be compensated according to compensation regulations set based on the information about participants and the numerical information transmitted from the collective intelligence converging system; and
allocating, by means of the operation computer, compensation to the set participants to be compensated.

12. The numerical determination method of claim 9, further comprising the steps of: providing, by means of a requestor terminal, compensation information by setting a condition according to a result of performing a business with respect to the determined numerical information, as compensation to be provided to participants of the collective intelligence converging system participating in the numerical determination when requesting the numerical determination to the operation computer or after receiving the numerical information determined from the operation computer;
calculating, by means of the requestor terminal, a business result using the determined numerical information of a subject for numerical determination received from the operation computer;
providing, by means of the requestor terminal, corresponding information to the operation computer by checking whether to achieve a condition set for compensation of the calculated business result;
providing, by means of the requestor terminal, a compensation profit included in the compensation information to the operation computer with respect to achievement of the condition set for compensation of the business result;
calculating, by means of the operation computer, an execution rate for each issue by determining whether to perform the compensation information provided by the requestor terminal;
providing, by means of the operation computer, allocation set in the compensation information to the participants with respect to the achievement of the condition set for compensation of the business result; and
calculating and storing, by means of the operation computer, reliability of the requestor terminal based on the calculated execution rate with respect to the compensation-related execution of the requestor terminal.
